# EUROPÄISCHE PATENTANMELDUNG

(11) **EP 3 527 066 A1**
(43) Veröffentlichungstag der Anmeldung: **21.08.2019**
(21) Anmeldenummer: 19153831.3
(22) Anmeldetag: 25.01.2019
(51) Int. Cl.: A01G 13/06, C11C 5/00

(54) **FROSTKERZENGEHÄUSE UND FROSTKERZE**

(30) Priorität: 19.02.2018 AT 600292018
(71) Anmelder: Schiefer, Josef, 8341 Paldau (AT); Baumgartner, Karl, 8341 Paldau (AT)
(72) Erfinder: Schiefer, Josef, 8341 Paldau (AT); Baumgartner, Karl, 8341 Paldau (AT)
(74) Vertreter: Gibler & Poth Patentanwälte KG

(57) **Zusammenfassung**

Bei einem Frostkerzengehäuse 1 für eine Frostkerze 2, umfassend einen Boden 3 und eine umlaufende Seitenwandung 4, wird vorgeschlagen, dass in der Seitenwandung (4) in einem bodennahen Bereich wenigstens zwei Lüftungsöffnungen (5,6) übereinander angeordnet sind.

## Beschreibung

Die Erfindung betrifft ein Frostkerzengehäuse für eine Frostkerze gemäß dem Oberbegriff des Anspruches 1.

Es ist bekannt bei landwirtschaftlichen Gärten im Falle eines Frostes Frostkerzen abzubrennen, um einen Frostschaden an Früchten zu vermeiden. Diese Frostkerzen sind anzündbare Heizmittel, welche in die landwirtschaftlichen Gärten verteilt werden, um durch ihr Abbrennen die Pflanzen mit Wärme zu versorgen. Bekannte Frostkerzen bestehen aus einem mit Brennmaterial wie Wachs oder Paraffin gefüllten Topf.

Nachteilig daran ist, dass bekannte Frostkerzen lediglich an einer begrenzten Fläche Energie abgeben, wodurch vergleichsweise viele Frostkerzen zum Beheizen eines Gartens benötigt werden. Weiters sind diese lediglich zur einmaligen Verwendung geeignet und beim Abbrennen kommt es zu einer starken Rußentwicklung.

Aufgabe der Erfindung ist es daher ein Frostkerzengehäuse der eingangs genannten Art anzugeben, mit welchem die genannten Nachteile vermieden werden können, mit welchem in einfacher Weise eine wiederbefüllbare Frostkerze bereitgestellt werden kann, welche hohe Wärmeleistung abgibt und eine geringe Rußentwicklung aufweist.

Erfindungsgemäß wird dies durch die Merkmale des Anspruches 1 erreicht.

Dadurch ergibt sich der Vorteil, dass mit dem Frostkerzengehäuse eine Frostkerze bereitgestellt werden kann, welche in einfacher Weise wiederbefüllbar ist und eine hohe Wärmeleistung abgibt sowie eine geringe Rußentwicklung ermöglicht. Durch die Form des Frostkerzengehäuses kann im Inneren des Frostkerzengehäuse eine Schlichtung an Kohlebriketts erfolgen, welche durch die beiden Lüftungsöffnungen derart mit Luft versorgt werden kann, dass die Kohlebriketts im Wesentlichen rußfrei abglühen können. Durch die zumindest zwei übereinander angeordneten Lüftungsöffnungen kann die Belüftung in einem engen, aber hohen Bereich erfolgen, wodurch ein besonders starker Kamineffekt erwirkt werden kann, der ein einfaches und zuverlässiges Anzünden der Kohlebriketts ermöglicht. Nach der Verwendung der Frostkerze kann diese wiederbefüllt werden. Beim Abbrennen der Frostkerze kann weiters die Wärme gut über die Seitenwandung abgegeben werden, wodurch eine hohe Wärmeabstrahlung erreicht werden kann.

Die Erfindung betrifft weiters die Verwendung eines Frostkerzengehäuses zur Herstellung einer Frostkerze gemäß dem Anspruch 8.

Die Erfindung betrifft weiters eine Frostkerze gemäß dem Anspruch 9.

Die Erfindung betrifft weiters die Verwendung einer Frostkerze in einem landwirtschaftlichen Garten nach Anspruch 14.

Die Unteransprüche betreffen weitere vorteilhafte Ausgestaltungen der Erfindung.

Ausdrücklich wird hiermit auf den Wortlaut der Ansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich eine bevorzugte Ausführungsform beispielhaft dargestellt ist, näher beschrieben. Dabei zeigt:
Fig. 1 eine bevorzugte Ausführungsform der Frostkerze in Vorderansicht;
Fig. 2 die bevorzugte Ausführungsform der Frostkerze als Transparenzdarstellung in Vorderansicht nach einem ersten Füllschritt;
Fig. 3 die bevorzugte Ausführungsform der Frostkerze als Transparenzdarstellung in Vorderansicht nach einem zweiten Füllschritt; und
Fig. 4 die bevorzugte Ausführungsform der Frostkerze als Transparenzdarstellung in Vorderansicht nach einem dritten Füllschritt.

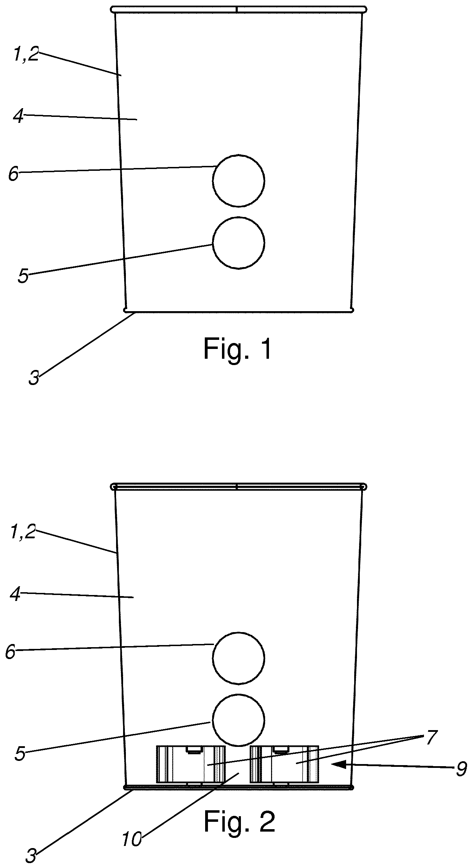

Die Fig. 1 bis 4 zeigen eine bevorzugte Ausführungsform eines Frostkerzengehäuses 1 für eine Frostkerze 2, umfassend einen Boden 3 und eine umlaufende Seitenwandung 4, wobei in der Seitenwandung 4 in einem bodennahen Bereich wenigstens zwei Lüftungsöffnungen 5,6 übereinander angeordnet sind.

Dadurch ergibt sich der Vorteil, dass mit dem Frostkerzengehäuse 1 eine Frostkerze 2 bereitgestellt werden kann, welche in einfacher Weise wiederbefüllbar ist und eine hohe Wärmeleistung abgibt sowie eine geringe Rußentwicklung ermöglicht. Durch die Form des Frostkerzengehäuses 1 kann im Inneren des Frostkerzengehäuse 1 eine Schlichtung an Kohlebriketts 7 erfolgen, welche durch die beiden Lüftungsöffnungen 5,6 derart mit Luft versorgt werden kann, dass die Kohlebriketts 7 im Wesentlichen rußfrei abglühen können. Durch die zumindest zwei übereinander angeordneten Lüftungsöffnungen 5,6 kann die Belüftung in einem engen, aber hohen Bereich erfolgen, wodurch ein besonders starker Kamineffekt erwirkt werden kann, der ein einfaches und zuverlässiges Anzünden der Kohlebriketts 7 ermöglicht. Nach der Verwendung der Frostkerze kann diese wiederbefüllt werden. Beim Abbrennen der Frostkerze 2 kann weiters die Wärme gut über die Seitenwandung 4 abgegeben werden, wodurch eine hohe Wärmeabstrahlung erreicht werden kann.

Weiters ist die Verwendung des Frostkerzengehäuses 1 zur Herstellung einer Frostkerze 2 vorgesehen.

Das Frostkerzengehäuse 1 ist dazu vorgesehen ein Brennmaterial aufzunehmen, welches in dem Frostkerzengehäuse 1 kontrolliert abgebrannt werden kann. Die Form des Frostkerzengehäuses 1 ist insbesondere derart ausgebildet, dass am Boden 3 zwei längliche Kohlebriketts 7, insbesondere Kohlebriketts 7 im Format Bündelstein, beabstandet zueinander aufgelegt werden können. Das Format Bündelstein, auch Bündelganzstein oder Bündelbrikett genannt, weist eine Länge von im Wesentlichen 182 mm auf, wobei an den Längsseiten des Profils eine flache Mulde sowie ein flacher Buckel angeordnet sind. Derartige Kohlebriketts 7 sind auch unter dem Markennamen REKORD Bündelstein weitverbreitet.

Von dem Boden 3 erstreckt sich eine umlaufende Seitenwandung 4, in welcher nahe am Boden 3 wenigstens zwei Lüftungsöffnungen 5,6 übereinander angeordnet sind, nämlich eine untere Lüftungsöffnung 5 und eine obere Lüftungsöffnung 6. Nach oben ist das Frostkerzengehäuse 1 bevorzugt zur Gänze offen.

Neben den zwei Lüftungsöffnungen 5,6 könnten noch weitere Lüftungsöffnungen vorgesehen sein. Besonders bevorzugt ist vorgesehen, dass für eine Luftzufuhr hauptsächlich, insbesondere lediglich, die zwei übereinander angeordneten Lüftungsöffnungen 5,6 vorgesehen sind.

Das Frostkerzengehäuse 1 kann insbesondere aus Blech, besonders bevorzugt aus Weißblech, ausgebildet sein. Dadurch kann eine im Inneren des Frostkerzengehäuses 1 besonders gut auch über die Seitenwände 4 nach außen abgegeben werden. Bei einem Frostkerzengehäuse 1 aus Blech, insbesondere Weißblech, kann das Frostkerzengehäuse 1 als Blecheimer, insbesondere als Weißblecheimer, bezeichnet werden.

Eine Höhe des Frostkerzengehäuses 1 kann insbesondere 250 mm bis 350 mm, bevorzugt im Wesentlichen 291 mm, betragen.

Weiters kann das Frostkerzengehäuse 1 einen, in den Figuren nicht dargestellten, Deckel aufweisen, mit welchem das Frostkerzengehäuse 1 bei einer Lagerung nach oben hin verschlossen werden kann.

Besonders bevorzugt kann vorgesehen sein, dass der Boden 3 kreisförmig ist, und der Boden 3 insbesondere einen Durchmesser von mindestens 200 mm, besonders bevorzugt 217 mm, aufweist. Durch diese Form des Bodens 3 lassen sich einfach zwei längliche Kohlenbriketts 7 des Formats Bündelstein beabstandet zueinander einlegen.

Insbesondere ist vorgesehen, dass zum Stapeln des Frostkerzengehäuses 1 mit einem baugleichen Frostkerzengehäuse 1 sich die Seitenwandung 4 vom Boden 3 weg konisch aufweitet. In einem geleerten Zustand lassen sich daher die Frostkerzengehäuse 1 ineinander gestapelt platzsparend lagern.

Weiters ist bevorzugt eine Frostkerze 2 umfassend ein Frostkerzengehäuse 1 vorgesehen, wobei in dem Frostkerzengehäuse 1 eine Schlichtung von länglichen Kohlebriketts 7, insbesondere Braunkohlebriketts, angeordnet ist, sowie eine Schüttung von einem rieselfähigen hölzernen Brenngut 8, insbesondere Hackschnitzel. Die Kohlebriketts 7 stellen hierbei den Hauptenergielieferanten der Frostkerze 2 dar, während das rieselfähige hölzerne Brenngut 8 primär die Aufgabe hat die zur Zündung der Kohlebriketts 7 benötigte Energie zu liefern. Weiters stützt die Schüttung an Brenngut 8 auch die Schlichtung an Kohlebriketts 7 bei einem allfälligen Transport. Im Vergleich zu herkömmlichen Frostkerzen 2 glühen die Kohlebriketts 7 im Wesentlichen rußfrei ab. Die Anordnung der Kohlebriketts 7 als Schlichtung kann einen Kamineffekt verstärken. Die Kohlebriketts 7 können insbesondere Braunkohlebriketts im Bündelsteinformat sein. Die Schüttung des rieselfähigen hölzernen Brennguts 8 kann insbesondere die Schlichtung der Kohlebriketts 7 durchdringen. Da die Frostkerze 2 im Gegensatz zu herkömmlichen Frostkerzen ohne einen Docht auskommt könnte die Frostkerze 2 alternativ auch als Heizeinrichtung für landwirtschaftliche Gärten bezeichnet werden, und das Frostkerzengehäuse 1 entsprechend als Heizeinrichtungsgehäuse.

Die Entzündung eines Kohlebriketts 7, besonders eines Bündelbriketts, erfordert üblicherweise eine hohe Hitze, weshalb Kohlebriketts 7 üblicherweise dazu vorgesehen sind in ein Feuer mit bereits hoher Hitze nachgelegt zu werden. Bei der Frostkerze 2 wird ein Entzünden von Kohlebriketts 7 in dem Frostkerzengehäuse 1 durch die besondere Anordnung der Lüftungsöffnungen 5,6 gezielt unterstützt.

Besonders bevorzugt kann die Verwendung einer Frostkerze 2 in einem, insbesondere als Glas- oder Folienkultur ausgebildeten, landwirtschaftlichen Garten vorgesehen sein. Der landwirtschaftliche Garten kann beispielsweise ein Obst-, Gemüse- oder Weingarten sein. Gerade bei einer Glas- oder Folienkultur sind herkömmliche Frostkerzen auf Wachs- oder Paraffinbasis aufgrund ihrer Rußentwicklung nicht geeignet, während die erfindungsgemäße Frostkerze 2 problemlos einsetzbar ist.

Bevorzugt kann vorgesehen sein, dass die wenigstens zwei übereinander liegenden Lüftungsöffnungen 5,6 im Wesentlichen kreisförmig sind. Dadurch kann eine besonders einfache und robuste Bauweise erreicht werden.

Insbesondere kann vorgesehen sein, dass zumindest eine der beiden übereinander liegende Lüftungsöffnungen 5,6 einen Durchmesser von mindestens 40 mm, insbesondere im Wesentlichen 50 mm, aufweist. Insbesondere können beide Lüftungsöffnungen 5,6 den gleichen Durchmesser aufweisen. Durch diese Größe der beiden Lüftungsöffnungen 5,6 kann eine optimale Luftzufuhr erreicht werden.

Insbesondere kann vorgesehen sein, dass die untere Lüftungsöffnung 5 einen Mittelpunkt mit einem Abstand von mindestens 55 mm, insbesondere im Wesentlichen 65 mm, zu dem Boden 3 aufweist. Bei Kohlebriketts 7 im Format Bündelstein lässt sich dadurch gezielt das rieselfähige Brenngut 8 zwischen der untersten Lage 9 und der zweituntersten Lage 11 der Schlichtung gezielt entzünden.

Weiters kann vorgesehen sein, dass die obere Lüftungsöffnung 6 einen Mittelpunkt mit einem Abstand von mindestens 55 mm, insbesondere im Wesentlichen 60 mm, zu dem Mittelpunkt der unteren Lüftungsöffnung 5 angeordnet ist. Dadurch lässt sich gezielt das rieselfähige Brenngut 8 um die drittuntersten Lage 12 der Schlichtung entzünden.

In der Fig. 1 ist die bevorzugte Ausführungsform eines Frostkerzengehäuses 1 von außen dargestellt. In den Fig. 2 bis 4 wird die Blickrichtung beibehalten, allerdings wird das Frostkerzengehäuse 1 durchsichtig dargestellt, sodass die Anordnung der Schlichtung zu den beiden Lüftungsöffnungen 5,6 besser ersichtlich wird.

Besonders bevorzugt kann vorgesehen sein, dass eine unterste Lage 9 der Schlichtung aus zwei im Wesentlichen parallel zueinander angeordneten Kohlebriketts 7 besteht, wobei durch einen Abstand zwischen den Kohlebriketts 7 ein Freiraum 10 ausgebildet ist, welcher Freiraum 10 auf die beiden Lüftungsöffnungen 5,6 hin ausgerichtet ist. Dies bedeutet, dass von den Lüftungsöffnungen 5,6 aus gesehen primär die Stirnseiten der Kohlebriketts 7 sichtbar sind. Durch diese Anordnung kann die Luft, und damit auch das Feuer zum Entzünden der Kohlebriketts 7 gut in den Freiraum 10 und dadurch in die Mitte des Frostkerzengehäuses 1 geleitet werden. In Fig. 2 ist die bevorzugte Ausführungsform der Frostkerze 2 in einem Füllstand dargestellt, in welchem zunächst lediglich die unterste Lage 9 angeordnet wurde.

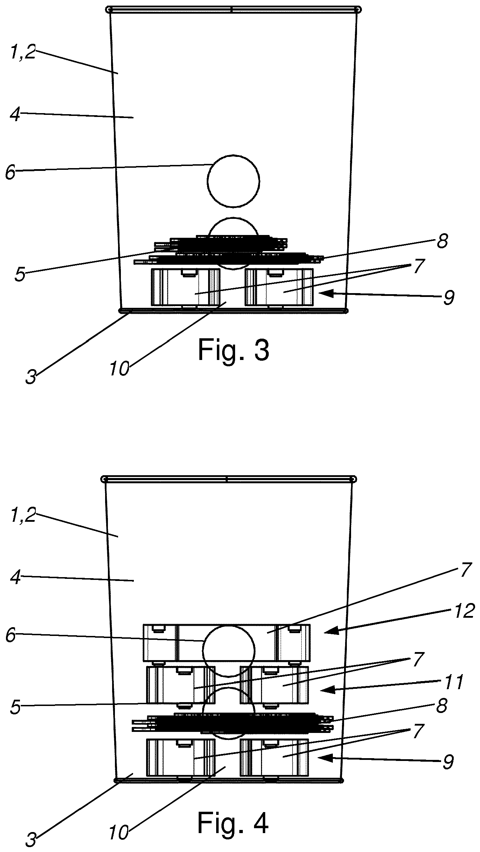

Nach dem Schlichten der untersten Lage 9 kann insbesondere ein erster Teil des rieselfähigen hölzernen Brenngutes 8 eingebracht werden, wie beispielhaft in Fig. 3 angedeutet ist. Der erste Teil des rieselfähigen hölzernen Brenngutes 8 kann insbesondere im Wesentlichen zwei Drittel einer Gesamtmenge des rieselfähigen hölzernen Brenngutes 8 sein.

Weiters kann vorgesehen sein, dass eine zweitunterste Lage 11 der Schlichtung aus zwei Kohlebriketts 7 besteht, welche im Wesentlichen deckungsgleich auf den Kohlebriketts 7 der untersten Lage 9 angeordnet sind. Dadurch kann der Freiraum 10 nach oben hin erhöht werden.

Insbesondere kann vorgesehen sein, dass eine drittunterste Lage 12 der Schlichtung aus zwei Kohlebriketts 7 besteht, welche im Wesentlichen um 90° verdreht auf den Kohlebriketts 7 der zweituntersten Lage 11 angeordnet sind. Diese drittunterste Lage 12 zwingt nun den erhitzten Luftstrom in die Mitte der Frostkerze 2, wodurch besonders einfach eine zur Zündung der Kohlebriketts 7 benötigte Temperatur erreicht werden kann. In Fig. 4 ist die bevorzugte Ausführungsform der Frostkerze 2 in einem Füllstand dargestellt, in welchem die drittunterste Lage 12 angeordnet wurde.

Nach Fertigstellung der Schlichtung der länglichen Kohlebriketts 7 kann ein restlicher Teil der Schüttung von dem rieselfähigen hölzernen Brenngut 8 in das Frostkerzengehäuse 1 eingebracht werden, um Zwischenräume auszufüllen.

Insbesondere kann die Schlichtung aus sechs Kohlebriketts 7 bestehen.

Weiters kann vorgesehen sein, dass im Wesentlichen 3l des rieselfähigen hölzernen Brenngutes 8 verwendet werden.

Insbesondere kann vorgesehen sein, dass die Schlichtung der Kohlebriketts 7 und die Schüttung des rieselfähigen hölzernen Brennguts 8 im Wesentlichen bündig abschließen.

In beiden Lüftungsöffnungen 5,6 können insbesondere Anzünder, bevorzugt aus Holzwolle, angeordnet werden. Derart kann die Frostkerze 2 einfach von außen durch die Lüftungsöffnungen 5,6 angezündet werden, wobei durch die Anzünder zunächst die Schüttung von dem rieselfähigen hölzernen Brenngut 8 angezündet wird, und bei dem Erreichen einer ausreichend hohen Brenntemperatur in der Mitte der Frostkerze 2 die Kohlebriketts entzünden. Der Anzünder kann insbesondere paraffingetränkt sein.

Weiters kann vorgesehen sein, dass zumindest die Schüttung aus rieselfähigem hölzernem Brenngut 8 mit einem flüssigen oder pulverförmigen Zündstoff getränkt oder bedeckt ist. Der Zündstoff kann insbesondere eine Kohlenwasserstoffverbindung oder eine Mischung an Kohlenwasserstoffverbindungen sein. Der flüssige Zündstoff kann insbesondere Ethanol sein. Der pulverförmige Zündstoff kann insbesondere zerriebenes Paraffin sein. Alternativ kann der Zündstoff ein Biozündstoff sein, welcher nicht aus Rohöl hergestellt wird.

Insbesondere können im Wesentlichen 250ml von dem Zündstoff verwendet werden.

## Patentansprüche

1. Frostkerzengehäuse (1) für eine Frostkerze (2), umfassend einen Boden (3) und eine umlaufende Seitenwandung (4), **dadurch gekennzeichnet, dass** in der Seitenwandung (4) in einem bodennahen Bereich wenigstens zwei Lüftungsöffnungen (5,6) übereinander angeordnet sind.

2. Frostkerzengehäuse (1) nach Anspruch 1, **dadurch gekennzeichnet, dass** der Boden (3) kreisförmig ist, und der Boden (3) insbesondere einen Durchmesser von mindestens 200 mm, besonders bevorzugt 217 mm, aufweist.

3. Frostkerzengehäuse (1) nach Anspruch 1 oder 2, **dadurch gekennzeichnet, dass** zum Stapeln des Frostkerzengehäuses (1) mit einem baugleichen Frostkerzengehäuse (1) sich die Seitenwandung (4) vom Boden (3) weg konisch aufweitet.

4. Frostkerzengehäuse (1) nach einem der Ansprüche 1 bis 3, **dadurch gekennzeichnet, dass** die wenigstens zwei übereinander liegenden Lüftungsöffnungen (5,6) im Wesentlichen kreisförmig sind.

5. Frostkerzengehäuse (1) nach einem der Ansprüche 1 bis 4, **dadurch gekennzeichnet, dass** zumindest eine der beiden übereinander liegende Lüftungsöffnungen (5,6) einen Durchmesser von mindestens 40 mm, insbesondere im Wesentlichen 50 mm, aufweist.

6. Frostkerzengehäuse (1) nach einem der Ansprüche 1 bis 5, **dadurch gekennzeichnet, dass** die untere Lüftungsöffnung (5) einen Mittelpunkt mit einem Abstand von mindestens 55 mm, insbesondere im Wesentlichen 65 mm, zu dem Boden (3) aufweist.

7. Frostkerzengehäuse (1) nach Anspruch 6, **dadurch gekennzeichnet, dass** die obere Lüftungsöffnung (6) einen Mittelpunkt mit einem Abstand von mindestens 55 mm, insbesondere im Wesentlichen 60 mm, zu dem Mittelpunkt der unteren Lüftungsöffnung (5) angeordnet ist.

8. Verwendung eines Frostkerzengehäuses (1) nach einem der Ansprüche 1 bis 7 zur Herstellung einer Frostkerze (2).

9. Frostkerze (2) umfassend ein Frostkerzengehäuse (1) nach einem der Ansprüche 1 bis 7, wobei in dem Frostkerzengehäuse (1) eine Schlichtung von länglichen Kohlebriketts (7), insbesondere Braunkohlebriketts, angeordnet ist, sowie eine Schüttung von einem rieselfähigen hölzernen Brenngut (8), insbesondere Hackschnitzel.

10. Frostkerze (2) nach Anspruch 9, **dadurch gekennzeichnet, dass** eine unterste Lage (9) der Schlichtung aus zwei im Wesentlichen parallel zueinander angeordneten Kohlebriketts (7) besteht, wobei durch einen Abstand zwischen den Kohlebriketts (7) ein Freiraum (10) ausgebildet ist, welcher Freiraum (10) auf die beiden Lüftungsöffnungen (5,6) hin ausgerichtet ist.

11. Frostkerze (2) nach Anspruch 10, **dadurch gekennzeichnet, dass** eine zweitunterste Lage (11) der Schlichtung aus zwei Kohlebriketts (7) besteht, welche im Wesentlichen deckungsgleich auf den Kohlebriketts (7) der untersten Lage (9) angeordnet sind.

12. Frostkerze (2) nach Anspruch 11, **dadurch gekennzeichnet, dass** eine drittunterste Lage (12) der Schlichtung aus zwei Kohlebriketts (7) besteht, welche im Wesentlichen um 90° verdreht auf den Kohlebriketts (7) der zweituntersten Lage (11) angeordnet sind.

13. Frostkerze (2) nach einem der Ansprüche 9 bis 12, **dadurch gekennzeichnet, dass** zumindest die Schüttung aus rieselfähigem hölzernem Brenngut (8) mit einem flüssigen oder pulverförmigen Zündstoff getränkt oder bedeckt ist.

14. Verwendung einer Frostkerze (2) nach einem der Ansprüche 9 bis 13 in einem, insbesondere als Glas- oder Folienkultur ausgebildeten, landwirtschaftlichen Garten.
